# EUROPEAN PATENT APPLICATION

(11) **EP 0 889 629 A2**
(43) Date of publication of application: **07.01.1999**
(21) Application number: 98111648.6
(22) Date of filing: 24.06.1998
(51) Int. Cl.: H04M 3/56, H04L 12/18

(54) **Multipoint-conference connection system**

(30) Priority: 04.07.1997 JP 179463/97
(71) Applicant: SHARP KABUSHIKI KAISHA, Osaka (JP)
(72) Inventor: Tsuji, Keisuke, Chiba-shi, Chiba (JP)
(74) Representative: Müller, Frithjof E., Dipl.-Ing.

(57) **Abstract**

A multipoint-conference connection system constructed by interconnecting a number of multipoint-conference control units each including a large number of conference-participating terminals, which can conduct the conference by using the multipoint-conference control unit with a lightened distributed load, thus eliminating the need for a top-level information control unit provided with a large capacity database enough to conduct centralized control of a whole system. Multipoint-conference connection units (MCU) (1, 2, 3, 11, 12, 111, 21, 22, 31, 32) are distributed to part-sets which are represented by sets 1, 2 and 3 respectively. The representative MCUs (1, 2, 3) conduct management of information within respective part-sets and, if necessary, send an information accessing request to other representative MCUs (1, 2, 3) of respective part-sets. In each part-set, the component MCUs are hierarchically connected with one another by respective hierarchical connection lines (A11, A12, ....). The part-sets are connected with one another by using respective peer-connection lines (1A2, 1A3, 2A3). This realizes easy management of information within each part-set and a simplified communication procedure for a whole conference domain. Furthermore, request signals and response signals are transferred upwards and downwards over hierarchical connection lines within the respective part-sets and exchanged between the part-sets over a peer-connection line. This allows the system to maintain the consistency and unification of information through the conference and have the interchangeability with existing prior art hierarchical connection systems.

## Description

### BACKGROUND OF THE INVENTION

The present invention relates to a multipoint-conference connection system and, more particularly, to a multipoint-conference connection system provided with communication control means for controlling communications between all conference-participating terminals each of which is provided with video, audio, and data communication means necessary for participating in a conference.

There has been developed such a prior art multipoint-conference connection system that provides connections between a plurality of multipoint-conference control units each of which has a plurality of conference-participating terminals connected thereto. For example, there is a multipoint communication service for conducting an audio-graphics conference according to ITU-T recommendation T.122 and T.125.

In the multipoint communication service (MCS) defined by the ITU recommendations, the multipoint-conference control units correspond to MCS providers each of which has a plurality of conferencing terminals connected thereto.

The MCS providers are interconnected one another in hierarchical relationship. Any MCS provider is connected upwards to zero or one MCS provider and downwards to zero or one or more MCS providers. All MCS providers are thus interconnected to form a tree of participants in a conference. This tree composes an MCS domain being a unit of the conference. A provider existing at the top of the tree is called a top provider. The MCS domain always has one top provider.

In an example of prior art connections between MCS providers in a MCS domain, the MCS domain represents the scope of a conference to be conducted. There is shown a tree structure in which a top provider exists at its top and has MCS providers hierarchically connected thereto by hierarchical connection lines respectively.

Each of the MCS providers provides user terminals connected thereto with a user connection service, channel service and token service. The user connection service is to provide user ID means for identifying terminals participating in the conference (the MCS domain). The channel service is to provide a logical channel over which data is transmitted between the terminals participating in the conference (the MCS domain). The token service is to provide exclusive control function for avoiding conflicts between plural terminals.

For these services, it is necessary to management of information on respective IDs of users', channels' and tokens', and the communicating states in the MCS domain. Each MCS provider is responsible for controlling the information in lower ranked MCS providers in the tree structure and must have a database necessary for information management. Accordingly, the top MCS provider has the responsibility for controlling the information contained in a whole tree of the MCS providers and must generate a necessary database by itself. Each MCS provider sends a request signal (e.g., request for issuing IDs or changing states) to an upper rank MCS provider and send an instruction signal (e.g., informing of an ID or change of any state) to a lower rank MCS provider.

In the prior art multipoint-conference connection system, a procedure of transmitting a signal between MCS providers hierarchically linked to a top MCS provider is described below:

There gives an example of transmitting a request signal generated from a user through a terminal connected to a lower-rank MCS provider included in an MCS domain.

The request signal from the MCS provider P3 is transferred upwards to an upper-rank provider P2 over a hierarchical connection line.

Next, the MCS provider P2 transferred the received request signal upward to a MCS provider P1 as a top provider over a hierarchical connection line.

The MCS provider P1 as a top provider processes the received request signal referring to a database that is controlled by itself. It generates an instruction signal to be sent downwards.

The instruction signal from the top MCS provider P1 is transferred to the MCS provider P2 over the hierarchical connection line through which it is then transmitted downwards to the MCS provider P3 over the hierarchical connection line. If necessary, the MCS provider P3 presents the instruction signal at the terminal of the user having sent the initial request signal.

As occasion demands, the instruction signal from the top MCS provider P1 is also transmitted to another MCS provider P4 connected thereto over a hierarchical another link.

The request signal is thus transferred upwards to the top MCS provider P1 and the instruction signal is thus transmitted downwards to the lower rank MCS providers P2, P3, P4 that form the MCS domain.

In the system according to the above-described method, the top MCS provider P1 can conduct centralized information management of a whole MCS domain but it must work with a heavy load as an amount of information may be increased as the number of MCS providers, terminals and users increases. Consequently, the top MCS provider P1 must usually have the high data processing capacity and must hold a large capacity database.

The top MCS provider P1 is usually decided through the negotiations at the connecting-stage, so all the MCS providers that may be possibly designated as the top MCS provider P1 must be a multipoint conference control unit provided with a highly organized database. Such control units may be very expensive.

### SUMMARY OF THE INVENTION

In view of the problems involved in the prior art, the present invention was made to provide a multipoint-conference connection system that includes a plurality of interconnected multipoint-conference control units each having a plurality of conference-participating terminals and eliminates the need of a highest-rank information management unit provided with a high processing capacity and a large capacity database enough to totally manage a whole system and realizing considerable reduction of information managing a load to every multipoint-conference control unit.

In view of foregoing, the present invention was made to provide a multipoint-conference connection system constructed of several part-sets each of which includes a plurality of multipoint-conference control units, individually manages internal information within the part-set and requests other part-sets to send information concerning other part-sets.

The management of information within each part-set is conducted by one of the multipoint conference control units, which serves as a representative of the part-set and, if necessary, sends or receives an information-accessing request to or from representatives of other part-sets and receives and sends requested or processed information from and to the representatives of the other part-sets. This is effective to efficiently maintain consistency of a whole conference domain.

Each part-set is of a prior art tree-structure in which the component multipoint-conference control units are hierarchically connected with one another while all part-sets are connected with one another by respective peer connection lines. This makes it possible to easily manage information within the respective part-sets and to use a simple communication procedure to maintain the consistency of the whole conference information.

Namely, request signals and response signals are transferred upwards and downwards along the tree connections within the respective part-sets and can be exchanged between the part-sets over respective peer-connection lines. This enables the system of the present invention to maintain the consistency of entire conference information keeping the interchangeability with the prior art conference system.
(1) Accordingly, one object of the present invention is to provide a multipoint-conference connection system which is constructed of a conference network including a plurality of multipoint-conference control units each having some conference-participating terminals connected thereto, wherein the multipoint-conference control units are distributed into part-sets each forming an individually manageable part-set network composed of the multipoint-conference control units distributed thereto and the part-sets are connected with one another at respective specified ones of the multipoint-conference control units of the respective part-set networks by using a peer-connection line for transmitting control information to and from the respective part-sets.
(2) Another object of the present invention is to provide a multipoint-conference connection system, which is as mentioned of (1) above and characterized in that the specially designated multipoint-conference control units of respective part-set networks are connected with one another and designated as representatives for generally controlling and managing respective part-set networks.
(3) A further object of the present invention is to provide a multipoint-conference connection system, which is as mentioned of (2) above and characterized in that each of the part-set networks is formed of multipoint-conference control units distributed thereto and hierarchically connected with one another to form a tree having the representative one disposed at the top thereof.
(4) A still further object of the present invention is to provide a multipoint-conference connection system, which is as mentioned of (3) above and characterized in that the representative multipoint-conference control units of the respective part-set networks are capable of transmitting request signals from the lower-rank multipoint-conference units and instruction signals to the lower-rank multipoint-conference control units in the respective part-set networks and any one of the representatives is capable of further exchanging the request and instruction signals with other part-set networks.

### BRIEF DESCRIPTION OF THE DRAWINGS

Fig. 1 shows a configuration of connections in a prior art multipoint-conference connection system provided by an multipoint communication service (MCS) provider.
Fig. 2 is a view for explaining a procedure of transmitting signals in a prior art multipoint-conference connection system provided by MCS providers.
Fig. 3 shows a configuration of connections provided by a multipoint-conference connection system according to an aspect embodying the present invention.
Fig. 4 is a view for explaining a procedure of transmitting signals in a multipoint-conference connection system according to an aspect embodying the present invention.

### PREFERRED EMBODIMENT OF THE INVENTION

Prior to explaining preferred embodiments of the present invention, prior art multipoint-conference connection system will be described below as references for the present invention.

There has been developed such a prior art multipoint-conference connection system that provides connections between a plurality of multipoint-conference control units each of which has a plurality of conference-participating terminals connected thereto. For example, there is a multipoint communication service for conducting an audio-graphics conference according to ITU-T recommendation T.122 and T.125.

In the multipoint communication service (MCS) defined by the ITU recommendations, the multipoint-conference control units correspond to MCS providers each of which has a plurality of conferencing terminals connected thereto.

The MCS providers are interconnected one another in hierarchical relationship. Any MCS provider is connected upwards to zero or one MCS provider and downwards to zero or one or more MCS providers. All MCS providers are thus interconnected to form a tree of participants in a conference. This tree composes an MCS domain being a unit of the conference. A provider existing at the top of the tree is called a top provider. The MCS domain always has one top provider.

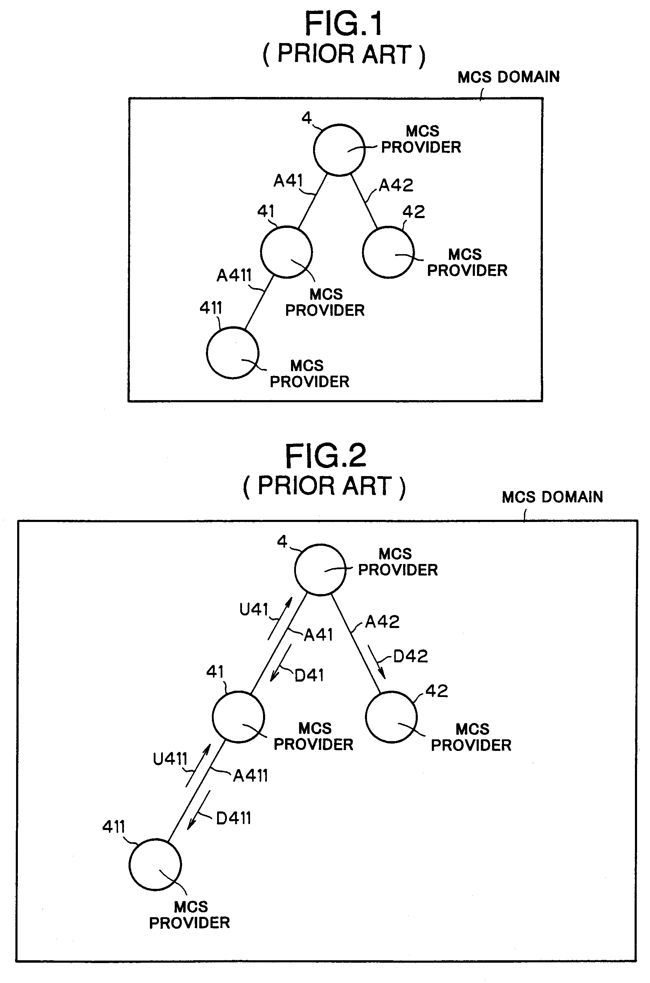

Fig. 1 depicts an example of prior art connections between MCS providers in a MCS domain. In Fig. 1, the MCS domain represents the scope of a conference to be conducted. There is shown a tree structure in which a top provider 4 exists at its top and has MCS providers 41, 411 and 42 hierarchically connected thereto by hierarchical connection lines A41, A411 and A42 respectively.

Each of the MCS providers provides user terminals connected thereto with a user connection service, channel service and token service. The user connection service is to provide user ID means for identifying terminals participating in the conference (the MCS domain). The channel service is to provide a logical channel over which data is transmitted between the terminals participating in the conference (the MCS domain). The token service is to provide exclusive control function for avoiding conflicts between plural terminals.

For these services, it is necessary to management of information on respective IDs of users', channels' and tokens', and the communicating states in the MCS domain. Each MCS provider is responsible for controlling the information in lower ranked MCS providers in the tree structure and must have a database necessary for information management. Accordingly, the top MCS provider 4 has the responsibility for controlling the information contained in a whole tree of the MCS providers and must generate a necessary database by itself. Each MCS provider sends a request signal (e.g., request for issuing IDs or changing states) to an upper rank MCS provider and send an instruction signal (e.g., informing of an ID or change of any state) to a lower rank MCS provider.

Fig. 2 depicts how to transmit signals over lines between MCS providers according to the prior art multipoint-conference connection system.

Referring to Fig. 2, a procedure of transmitting a signal between MCS providers hierarchically linked to a top MCS provider is described below:

In Fig. 2, there is shown an example of transmitting a request signal generated from a user through a terminal connected to a lower-rank MCS provider 411 included in an MCS domain.

The request signal from the MCS provider 411 is transferred upwards to an upper-rank provider 41 over a hierarchical connection line A411 in the direction shown by an arrow U411.

Next, the MCS provider 41 transferred the received request signal upward to a MCS provider as a top provider 4 over a hierarchical connection line A41 in the direction shown by an arrow U41.

The MCS provider 4 as a top provider processes the received request signal referring to a database that is controlled by itself. It generates an instruction signal to be sent downwards.

The instruction signal from the top MCS provider is transferred to the MCS provider 41 over the hierarchical connection line A41 in the direction shown by an arrow D41 through which it is then transmitted downwards to the MCS provider 411 over the hierarchical connection line A411 in the direction shown by an arrow D411. If necessary, the MCS provider 411 presents the instruction signal at the terminal of the user having sent the initial request signal.

As occasion demands, the instruction signal from the top MCS provider 4 is also transmitted to another MCS provider 42 connected thereto over a hierarchical an other link A42 in the direction shown by an arrow D42.

The request signal is thus transferred upwards to the top MCS provider 4 and the instruction signal is thus transmitted downwards to the lower rank MCS providers 41, 411, 42 that form the MCS domain.

In the system according to the above-described method, the top MCS provider 4 can conduct centralized information management of a whole MCS domain but it must work with a heavy load as an amount of information may be increased as the number of MCS providers, terminals and users increases. Consequently, the top MCS provider 4 must usually have the high data processing capacity and must hold a large capacity database.

The top MCS provider 4 is usually decided through the negotiations at the connecting-stage, so all the MCS providers that may be possibly designated as the top MCS provider 4 must be a multipoint conference control unit provided with a highly organized database. Such control units may be very expensive.

A preferred embodiment of the present invention will be described in detail by way of example and with reference to the accompanying drawings.

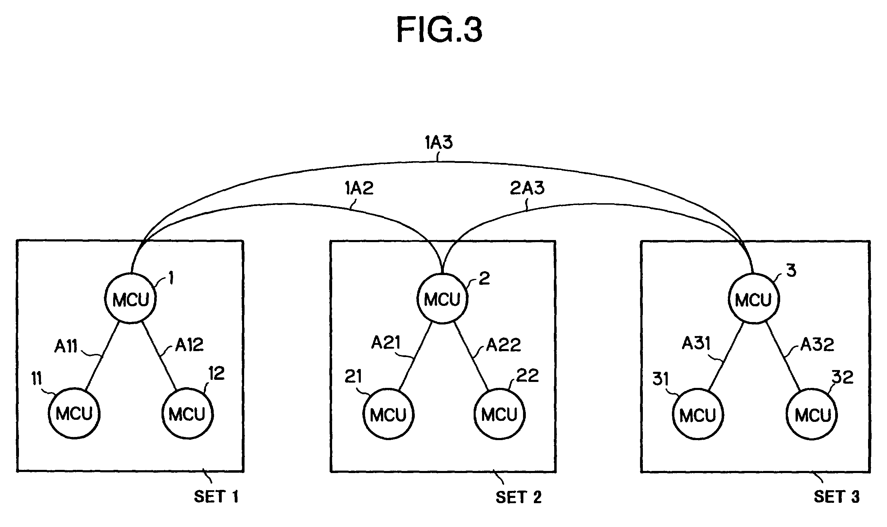

Fig. 3 shows a connection block-diagram of a multipoint-conference connection system embodying the present invention.

As shown in Fig. 3, multipoint-conference control units (MCU) 1, 2, 3, 11, 12, 21, 22, 31 and 32 are distributed to part-sets (set 1, set 2 and set 3) which make up a conference. Multipoint-conference control units (MCU) in each part-set are interconnected by hierarchical lines (A11 A12 or A21, A22 or A31, A32) to form a tree structure. The sets 1, 2 and 3 are connected with one another in equal-level terms by peer lines 1A3, 1A2 and 2A3.

The sets 1, 2 and 3 form respective part-sets each of which individually manages information concerning own users, channels and token and has a tree connection of the internal MCU units operating in the same hierarchical manner as the prior art system described above. Any set may request other set to access internal information therein and send the information if the need arises.

The individual management of internal information by respective part-sets realizes adequate distribution of whole system information so that a conference including a large number of users and multipoint-conference control units (MCU) can be conducted without using a sole top MCU having a large capacity and high-level database that the prior art system uses for centralized control of all MCU.

The sets 1, 2, and 3 have respective representative MCUs 1, 2 and 3 each of which conducts centralized management of the internal information to ensure the consistency of the information. This makes it possible to easily maintain the unification of whole conference information.

Besides the above, each part-set has a tree structure with a representative MCU at the top thereof, which is similar to the prior art system and can easily manage and transmit information. This assures the interchangeability with the prior art system.

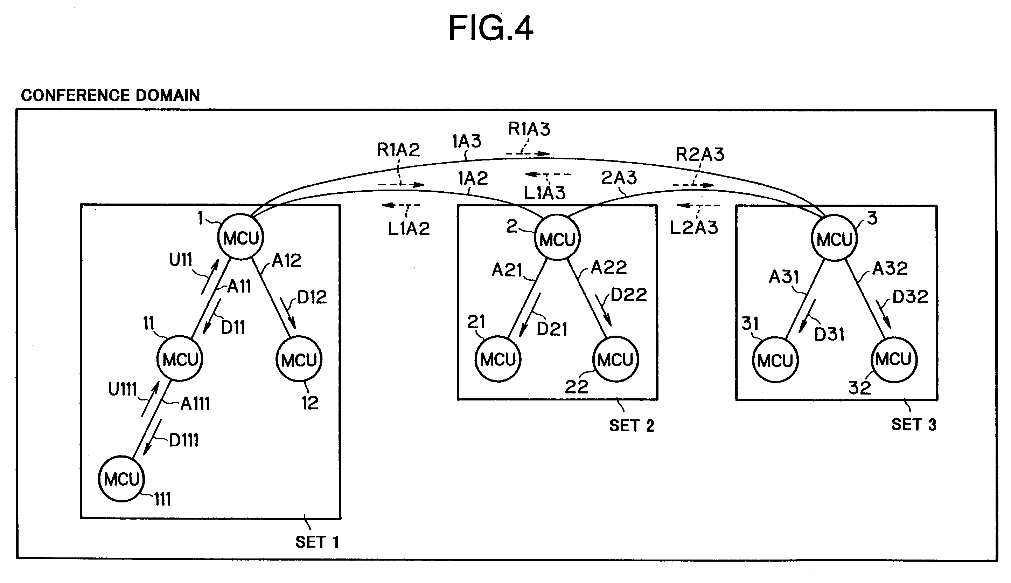

Referring to Fig. 4, a procedure of transmitting signals exchanged between multipoint-conference control units in a multipoint-conference connection system according to an aspect of the present invention will be described below.

Now, it is assumed that a user at a terminal connected to an MCU 111 generated a request signal to a whole conference domain.

The request signal from the MCU 111 is transferred upwards (in the direction shown by an arrow U111) to an upper-rank MCU 11 over a hierarchical connection line A111.

Next, the MCU 11 transfers the received request signal upward (U11) to an MCU 1 over a hierarchical connection line A11.

The MCU 1 is a representative of the set 1 being a part-set of the system, which processes the received request signal referring to its database. If the request signal does not concern information included in the database, the MCU 1 transmits the request signal to the representative MCUs 2 and 3 of the sets 2 and 3 over respective peer lines 1A2 and 1A3 in the directions R1A2 and R1A3 respectively.

If the MCU 3 has the requested information in its database, it conducts necessary processing for the received requested signal, generates an instruction signal and transmits the signal to the MCUs 1 and 2 over the peer lines 1A3 and 2A3 in the directions L1A3 and L2A3 respectively.

The MCUs 1 and 2 receive the instruction signal and update their database if need be. The MCU 1 transmits the instruction signal to the MCUs in the set 1. The instruction signal from the MCU 1 is transferred first downwards (D11) to the MCU 11 over the hierarchical connection line A11 through which it is transmitted further downwards (D111) to the MCU 111 over the hierarchical connection line A111. If necessary, the MCU 1 transmits the instruction signal downward (D12) to the MCU 12 over the hierarchical connection line A12.

As occasion demands, the MCU 2 of the set 2 also transmits the instruction signal downwards (D21, D22) to MCUs 21 and 22 over hierarchical connection lines A21 and A22 respectively.

If necessary, the MCU 3 of the set 3 further transmits the instruction signal downwards (D31, D32) to MCUs 31 and 32 over hierarchical connection lines A31 and A32 respectively.

If the request signal from the MCU 111 can be processed referring to the database of the set 1, the MCU 1 performs the necessary processing and generates an instruction signal and transfers the generated instruction signal to the MCUs 2 and 3 (representatives of the sets 2 and 3) over the respective peer lines 1A3 and 1A2 in the direction R1A3 and R1A2. The MCUs 2 and 3 update the database if necessary and transmit the instruction signal downwards to the MCUs in the respective sets 2 and 3.

Signals to be exchanged between the sets 1 to 3 making-up part-sets of the system are the same request and instruction signals to be exchanged within each part-set, which signals are interchangeable with those used in the prior art system. This makes it possible to maintain the consistency of the whole conference system keeping the interchangeability with the prior art multipoint-conference connection procedure. In other word, the prior art multipoint-conference control units can be easily converted to those of the present invention.

Advantageous effects obtained by the present invention are as follows:

The load of information management of a whole conference is distributed to a plurality of multipoint-conference control units eliminates the possibility of centralizing a working load to a specified control unit as occurs in the prior art system. This system can conduct a multipoint conference in which a large number of users participate through multipoint conference control units each having a relatively small capacity of information management, thus realizing saving the cost for carrying-out MCUs used in the system. Furthermore, part-sets of the network are connected with each other at an equal level through respective representative MCUs each generally managing respective part-set of the network, thus enabling the system to attain high efficiency of information processing.

In addition to the advantageous effects above-mentioned, each part-set of the network is formed of a tree structure allowing centralized information management, thus making it easier to maintain the consistency of information though a whole conference domain. Furthermore, the part-sets of the network apply a procedure of transmitting signals therebetween, which has the interchangeability with that used in the prior art system. This feature allows the system of the present invention to have the interchangeability with the prior art multipoint-conference system. Namely, the prior art existing system may be easily converted to the system of the present invention.

The advantageous effect further obtained by the present invention is to provide representative multipoint-conference control units with functions necessary for carrying-out the procedure of transmitting request and instruction signals within the network when operating the conference system after connecting the part-sets of the network as above-described.

## Claims

1. A multipoint-conference connection system constructed of a conference network including a plurality of multipoint-conference control units (1, 2, 3, 11, 12, 111, 21, 22, 31, 32) each having some conference-participating terminals connected thereto, characterized in that the multipoint-conference control units (1, 2, 3, 11, 12, 111, 21, 22, 31, 32) are distributed into part-sets each forming an individually manageable part-set network composed of the multipoint-conference control units (1, 2, 3, 11, 12, 111, 21, 22, 31, 32) distributed thereto and the part-sets are connected with one another at respective specified ones (1, 2, 3) of the multipoint-conference control units (1, 2, 3, 11, 12, 111, 21, 22, 31, 32) of the respective part-set networks by using a peer-connection line for transmitting control information to and from the respective part-sets.

2. A multipoint-conference connection system as defined in claim 1, characterized in that the specified multipoint-conference control units (1, 2, 3) of respective part-set networks are connected with one another and designated as representatives for generally controlling and managing respective part-set networks.

3. A multipoint-conference connection system as defined in claim 2, characterized in that each of the part-set networks is formed of multipoint-conference control units (1, 2, 3, 11, 12, 111, 21, 22, 31, 32) distributed thereto and hierarchically connected with one another to form a tree with the representative one (1, 2, 3) disposed at the top thereof.

4. A multipoint-conference connection system as defined in claim 3, characterized in that representative ones (1, 2, 3) of the multipoint-conference control units (1, 2, 3, 11, 12, 111, 21, 22, 31, 32) of the respective part-set networks are capable of transmitting request signals from the lower-rank multipoint-conference units and instruction signals to the lower-rank multipoint-conference control units in the respective part-set networks and any one of the representatives (1, 2, 3) is capable of further exchanging the request signal and the instruction signal with other part-set networks.
